# EUROPEAN PATENT SPECIFICATION

(11) **EP 4 055 062 B1**
(45) Date of publication and mention of the grant of the patent: **18.02.2026**
(21) Application number: 20804653.2
(22) Date of filing: 06.11.2020
(51) Int. Cl.: C08B 37/00, C08L 5/04

(54) **METHOD OF PROCESSING SEAWEED**
VERFAHREN ZUR BEHANDLUNG VON ALGEN
PROCÉDÉ DE TRAITEMENT D'ALGUES

(30) Priority: 07.11.2019 GB 201916199
(43) Date of publication of application: 14.09.2022
(73) Proprietor: Alginor ASA, 5525 Haugesund (NO)
(72) Inventor: GREEN, Ricky Lee, Barnsley, South Yorkshire S75 5PZ (GB); VANDENBURG, Harold John, York, Yorkshire YO51 9NS (GB)
(74) Representative: Dehns
(86) International application number: PCT/GB2020/052824
(87) International publication number: WO 2021/090023

(56) References cited:
- KR-A- 20060 031 936
- KR-B1- 100 367 716

## Description

### Field of the Invention

The present invention relates to a process for obtaining polysaccharide from macroalgae or part thereof. Certain aspects of the invention relate to a process for obtaining polysaccharide from macroalgae which results in enhanced polysaccharide quality and/or yield and/or a shortened treatment time when compared to conventional extraction methods.

In particular, the present invention relates to a process for obtaining an alginate selected from alginic acid, alginate salts, and alginate derivatives from the macroalgae *Laminaria hyperborea.*

### Background of the Invention

Seaweed, also referred to as macroalgae, is a very versatile product widely used for food by direct human consumption but also as a source of many commercially useful products for use in the food, cosmetics and pharmaceutical industry as well as in agriculture as fertilizer and animal feed. In particular, macroalgae is known to be a rich source of bioactive substances including carotenoids (such as fucoxanthin), polyphenols and hydrocolloids (for example alginates). Structurally, certain species of macroalgae consists of leaf, bark and stipe components and it is known that different bioactive substances are concentrated in these components at different levels.

Carotenoids are a class of naturally occurring pigments synthesized by photosynthetic plants, algae, bacteria, and some fungi, and contribute to the yellow and red colours of many foods. In particular, carotenoids can be extracted from macroalgae and are known to have beneficial photoprotective and antioxidant properties. One example of a carotenoid is fucoxanthin, a xanthophyll found in the chloroplasts of brown algae, and particularly abundant in brown macroalgae, having a brown or green colour. Whilst, fucoxanthin can be found in macroalgae leaf, bark and stipe, it is particularly concentrated in the bark and is present in much lower levels in the stipe. Fucoxanthin has been found to have useful bioactive properties including promoting weight loss, improving blood lipid profiles and decreased insulin resistance in animal models of obesity. As a result, carotenoids in general and fucoxanthin in particular are widely used commercially as active pharmaceutical ingredients, dietary supplements, nutraceuticals, food additives, in cosmetics and as additive in animal feed. There is also research that suggests fucoxanthin and its metabolite fucoxanthinol may be effective in the treatment and/or prevention of cancer (Martin, Mar Drugs, 2015 Jul 31; 13(8) 4784-98).

Polyphenols are secondary metabolites of plants which are known to be abundant micronutrients in the mammalian diet. Polyphenols have been shown to exhibit antioxidant activity and evidence for their role in the prevention of degenerative diseases such as cancer and cardiovascular diseases is emerging. In macroalgae, polyphenols are found in high levels in the bark and leaf.

Hydrocolloids are a heterogeneous group of long chain polymer polysaccharides and protein characterised by their ability to form viscous dispersions in water. Alginate, agar and carrageenan are water soluble carbohydrates that can be extracted from macroalgae. Agar and carrageenan are derived from red macroalgae while alginates can be extracted from brown macroalgae and are present in high concentration in the stipe.

Alginates have many beneficial uses across a wide range of industries including pharmaceuticals, cosmetics, food and textile printing. For example, alginate is used in dental impression moulds and wound dressings due to its hypoallergenic properties. Further uses include as a thickening agent in foods, for both humans and animals, and as a weight loss supplement. In addition, alginate has also been incorporated into fertilizer to improve fertilizer use efficiency and reduce environmental pollution through the development of nitrogen slow release products (Ind. Eng. Chem. Res., 2012, 51 (3), pp 1413-1422). Also, alginate is a useful product for paper manufacturing and printing.

Brown macroalgae, often used as sources of alginate, are species of *Ascophyllum, Durvillaea, Ecklonia, Laminaria, Lessonia, Macrocytis* and *Sargassum.* In particular, alginates are extracted from *Laminaria hyperborea.* However, the chemical structure of the alginate varies from one genus to another, and similar variability is found in the properties of the alginate.

Alginates are usually extracted from brown macroalgae as the sodium salt. Alginate extraction processes aim to obtain dry, powdered alginate, in particular sodium alginate. The process of extracting alginate from macroalgae involves first soaking the macroalgae in alkali solution, for example sodium carbonate, over a period of hours to dissolve the alginate, forming a thick gel. A high-quality alginate is found to be capable of forming strong gels.

Alginate extracts require 'thinning' for conventional filtration methods for the removal of seaweed residue, usually performed by diluting in water. The dissolved alginate is recovered from the aqueous solution typically by adding acid to precipitate alginic acid, by adding a calcium salt to precipitate calcium alginate, or by adding an anti-solvent such as ethanol.

The acid option causes alginic acid to form, which is insoluble in water and so separates in the form of a gel. Optionally, after recovery the acid may be converted to a salt, for example the sodium salt, by the addition of a suitable carbonate or hydroxide solution, for example sodium carbonate or sodium hydroxide. The salt may then be precipitated by the addition of an anti-solvent such as ethanol. The precipitate can be separated from the mixture by filtration methods and then dried and milled for commercial use.

In contrast, alginate extraction by the addition of a calcium salt, such as calcium chloride results in the production of insoluble calcium alginate fibres which are converted to alginic acid fibres upon addition of an acid. Optionally, the addition of sodium carbonate converts the alginic acid fibres to sodium alginate.

As macroalgae is a rich source of useful products, such as alginates, which have high commercial value, various pre-treatment processes have been used to increase the yield and quality of macroalgae products. For example, pre-treatment of macroalgae with saturated steam, for example by positioning the macroalgae or parts thereof in close proximity to the surface of boiling water, results in an increased yield of alginate. However, steam pre-treatment requires a long treatment time and results in a low quality alginate.

Alginates are concentrated in the stipe of macroalgae, therefore sectioning the macroalgae into parts is useful for the extraction of alginates. Another benefit of sectioning macroalgae in comparison to processing macroalgae as a whole is to avoid products with undesirable characteristics. For example, polyphenols primarily provide a dark pigment to brown macroalgae and during the processing of whole macroalgae, polyphenols are typically incorporated into the alginate extraction process forming a non-reversible dark alginate solution. Alginate is of higher value if it is colourless. Thus, processes that remove materials from the stipe which would otherwise discolour alginate are desirable.

Washing of the stipe portion with hot water up to 90°C is described in WO 2015067971 A1, however this is done only to remove polyphenols which would otherwise cause unwanted browning of the alginate. A disadvantage of pre-treating macroalgae or parts thereof with hot water (or steam, as discussed above) is the long treatment time required to obtain an appropriate yield of alginate.

Formaldehyde has also been used to reduce the brown colour of the alginate. Some prior art processes make use of formaldehyde to preserve macroalgae after harvesting and prior to processing. In this instance, formaldehyde acts both as a preservative and to remove colour from the macroalgae which ultimately results in 'whiter' alginate. A disadvantage of formaldehyde pre-treatment is the use of hazardous substances which are not environmentally friendly. Formaldehyde is a volatile organic compound (VOC) that can cause irritation and breathing difficulties in humans and animals. In an aquatic environment, formaldehyde is persistently toxic with a half-life of from 1 to 10 days. Marine algae have been found to be particularly sensitive to formaldehyde at concentrations of from 0.1 to 1 mg/l. it would therefore be desirable if processing of macroalgae could be carried out without the use of formaldehyde.

There is an ongoing need in this field for improved processes that result in the production of higher quality alginate, for example alginate that is not discoloured or is less discoloured. Therefore, it would be beneficial if a process could be provided that facilitated the extraction of higher quality alginate by removing materials from macroalgae that could result in discolouration of alginate during subsequent alginate extraction processes. It would also be advantageous to obtain alginates by a more environmentally friendly process and would be beneficial if such a process exhibited a shorter treatment time. KR100367716 B1 discloses a method of manufacture of water soluble low-molecular alginate by autoclaving pretreatment and hot water extraction from seaweed.

Other pre-treatment processes have made use of acid, and a reduction in the viscosity of the solutions produced from alginate extraction has been observed upon acid pre-treatment, which is thought to be due to reduction in polymer chain length. The reduction in viscosity is generally higher for more concentrated acid and longer treatments. As reduced viscosity is an indicator of an unstable product, shown by an increased vulnerability to degradation, there is a need for improved processes which can obtain alginate with increased viscosity from macroalgae.

Acid pre-treatment has also been shown to increase the yield of alginate. The methods used have been reviewed by Hernandez-Carmona et al. (J. Applied Phycology, 1999, 10, 507-513), who observed that 0.1M hydrochloric acid was commonly used, but that the concentration could be reduced in some circumstances to 0.006M without observing a difference in the yield. A disadvantage of acid pre-treatment is the use of hazardous substances which are not environmentally friendly.

It would be advantageous if a process for the extraction of macroalgae products such as alginate could be provided that was more environmentally friendly than existing processes.

It would also be advantageous if a process could be provided that enabled useful substances such as alginates to be extracted from macroalgae on a commercially viable scale with improved yield.

It would be advantageous if a process could be provided that exhibited an increased yield and quality of alginate, whilst having a shorter treatment time.

The inventors have been successful in devising a process which addresses one or more of these issues.

Unexpectedly and surprisingly, it has been found that useful substances such as alginate can be extracted from macroalgae using a simplified process that makes use of superheated water. As herein described, the superheated water is employed in a pre-treatment step in order to reduce the molecular weight of the target substance, such as alginate, thereby aiding its extraction from the macroalgae in a subsequent extraction step. The process of the invention may be more environmentally friendly than prior art processes. In particular, the subsequent extraction step may be carried out under milder conditions than those currently used in industrial processing of macroalgae to produce alginate. Lower concentrations of highly caustic substances such as sodium carbonate, for example, is employed resulting in reduced CO₂ emissions. Furthermore, use of the process removes materials from macroalgae that may result in alginate discolouration during subsequent alginate extraction. Unexpectedly, it has been found that use of the process for the extraction of substances such as alginate resulted in a shorter treatment time and extraction of alginate with high viscosity. Certain embodiments of the present invention aim to at least partially mitigate the problems associated with the prior art.

It is an aim of certain embodiments of the present invention to increase the yield of alginate, provide a method for shorter treatment time and/or increase the quality of the product.

### Summary of Certain Embodiments of the Invention

It is an aim of certain aspects of the invention to provide, and there is provided herein, a process for obtaining polysaccharide from macroalgae, or part thereof, comprising the steps of:
- a pre-treatment step of exposing the macroalgae, or part thereof, to superheated water at a temperature of about 101°C to 150°C for a period of from 30 seconds to 60 minutes, wherein the superheated water is maintained in a liquid state by the application of pressure; and
- subsequently, an extraction step of extracting polysaccharide from the macroalgae, or part thereof;

wherein the polysaccharide is an alginate selected from alginic acid, an alginate salt, and an alginate derivative; and
wherein the step of extracting polysaccharide from the macroalgae, or part thereof, comprises contacting the macroalgae, or part thereof, with an alkali solution to yield an alginate composition.

In the process of the invention, the step of exposing the macroalgae to superheated water is performed as a "pre-treatment", i.e. it is carried out prior to extraction and recovery of the desired polysaccharide.

Whilst the superheated water is a substance having solvating capability, it is not used in the invention to solubilise, and thus extract, the target polysaccharide from the tissues of the macroalgae. During the pre-treatment step of the process, any extraction of the polysaccharide by the superheated water will be minimal due to the conditions under which it is employed.

Extraction of the polysaccharide by the superheated water in the pre-treatment step is minimised (e.g. substantially prevented) by appropriate selection of the reaction conditions during this particular step of the process, i.e. the temperature of the superheated water and duration of the pre-treatment. Without wishing to be bound by theory, it is thought that the limited duration of the pre-treatment step and the selected temperature range of the superheated water causes limited hydrolysis of the polysaccharide (e.g. alginate) chains to form shorter polymeric chains. This partial depolymerisation to reduce the molecular weight of the polysaccharide is believed to aid in its solubilisation and thus extraction in the subsequent extraction step of the process. The superheated water does not dissolve (and thus extract) the target polysaccharide substance to any appreciable degree during the pre-treatment step.

Optionally, the macroalgae, or part thereof, that is exposed to the superheated water has not undergone any previous processing step other than harvesting, storing and/or transporting. Optionally, the macroalgae, or part thereof, that is exposed to the superheated water has not undergone any previous bleaching step. Optionally, the macroalgae, or part thereof, that is exposed to the superheated water has not undergone any previous bleaching step by exposure to a chemical agent. Optionally, the macroalgae, or part thereof, that is exposed to the superheated water is unbleached macroalgae.

Therefore, the invention also provides, and there is provided herein a process for obtaining polysaccharide, for example alginate, from macroalgae, or a part thereof as described herein provided that the macroalgae, or part thereof, that is exposed to the superheated water has not undergone any previous bleaching step.

The invention also provides, and there is provided herein a process for obtaining polysaccharide, for example alginate, from macroalgae, or a part thereof as described herein provided that the macroalgae, or part thereof, that is exposed to the superheated water is unbleached.

It is believed that use of the process removes materials from macroalgae that may result in alginate discolouration during subsequent alginate extraction to the extent that bleaching of macroalgae, or part thereof, prior to alginate extraction may not be necessary. For example, any naturally occurring pigments, such as polyphenols, which may be present in the macroalgae may dissolve to some extent in, or be decomposed by, the superheated water. In this way, these can readily be removed, for example, by rinsing the macroalgae following the pre-treatment step and prior to extraction of the target polysaccharide. This can lead to an enhanced yield of higher quality polysaccharide (e.g. alginate).

Optionally, the macroalgae, or part thereof, that is exposed to the superheated water may be dried prior to exposing to superheated water. Aptly, the macroalgae, or part thereof, may be air dried at ambient temperature or at an elevated temperature. Alternatively, the macroalgae, or part thereof, that is exposed to the superheated water may be fresh, i.e. not dehydrated to any appreciable extent.

Therefore, the invention also provides, and there is provided herein, a process for obtaining polysaccharide, for example alginate, from macroalgae, or part thereof as described herein, comprising the steps of:
- drying macroalgae, or part thereof ('the drying step');
- exposing macroalgae, or part thereof, to superheated water (the 'pre-treatment step'); and
- extracting polysaccharide from the macroalgae, or part thereof (the 'extraction step').

Aptly, the macroalgae is separated into parts prior to the drying step.

It is believed that drying the macroalgae, or part thereof after harvesting may allow for extraction of better quality alginate. It is also believed that drying the macroalgae, or part thereof, after harvesting may allow for extraction of alginate without the need for chemical preservatives such as formaldehyde after macroalgae harvesting.

The polysaccharide is an alginate selected from: alginic acid; alginate salt(s); and/or alginate derivatives thereof. In a preferred embodiment, the product produced by the process herein described will be sodium alginate, for example dried sodium alginate.

Aptly, the macroalgae is brown algae.

Aptly, the macroalgae, or part thereof, that is exposed to the superheated water is unbleached macroalgae, for example unbleached brown macroalgae.

As noted herein, the superheated water is employed to achieve a limited degree of hydrolysis of the polysaccharide material and so aid in its subsequent extraction. It is not intended that the superheated water should cause extensive hydrolysis of the polysaccharide chains since that will unduly impact the quality of the extracted material (e.g. it will reduce its viscosity). As will be understood, the superheated water for use in the process of the invention should thus be substantially free from (e.g. free from) other substances that can hydrolyse the polysaccharide. For example, it will be substantially free from any acid or alkali substances such as any mineral acid or sodium carbonate.

The pH of the water for use in the invention will generally be in the range from about 5 to about 8, e.g. about 7.

The water for use in the process of the invention will typically be deionised water. This may be prepared using any method known in the art, for example by passing potable water through a reverse osmosis system whereby to remove the majority of the dissolved ions, followed by contact with a deioniser resin which removes any remaining ions. The conductivity of the deionised water will be low, for example it may be less than about 10 µS, preferably in the range from 3 to 5 µS.

The macroalgae, or parts thereof, is exposed to superheated water, preferably at a temperature of 105°C to 130°C, for example 110°C to 125°C, for example 112°C to 118°C, for example about 115°C, for example 110°C to 130°C, for example about 125°C.

Aptly, the superheated water is maintained in a liquid state by the application of pressure, for example pressure applied at approximately 105 to 500 kPa, for example 120 to 300 kPa, for example 140 to 240 kPa, for example 150 to 190 kPa, for example 165 to 170 kPa, for example 140 to 270 kPa, for example 130 to 235 kPa.

Aptly, the superheated water is maintained in a liquid state at a temperature of about 101°C to 150°C by the application of pressure, for example applied at approximately 105 to 500 kPa, for example at a temperature of 105°C to 130°C by the application of pressure applied at approximately 105 to 500 kPa, for example at a temperature of 110°C to 125°C by the application of pressure applied at 120 to 300 kPa, for example at a temperature of 112°C to 118°C by the application of pressure applied at approximately 140 to 240 kPa, for example at a temperature of 115°C by the application of pressure applied at approximately 150 to 190 kPa, for example at a temperature of 110°C to 130°C by the application of pressure applied at approximately 165 to 170 kPa, for example at a temperature of 125°C by the application of pressure applied at approximately 130 to 235 kPa.

Aptly, the macroalgae is exposed to the superheated water for a period of 2 to 40 minutes, for example 5 minutes to 25 minutes, for example 5 minutes to 20 minutes, for example 7 to 15 minutes, for example 7 to 13 minutes.

Aptly, macroalgae, or part thereof, is immersed in water contained in a suitable vessel. The water may already be in the vessel and is heated after addition of the macroalgae, or part thereof. Alternatively, the macroalgae, or part thereof, may be placed in the vessel and the superheated water added.

Aptly, macroalgae, or part thereof, may be added continuously to the vessel containing the superheated water, for example by means of an extruder, screw drive or twin drive system.

Following the pre-treatment step of the process, the macroalgae or part thereof is subjected to an extraction step in which the target polysaccharide is extracted from the macroalgae, or part thereof, and optionally recovered. Aptly, the macroalgae or part thereof is separated from the superheated water and cooled prior to carrying out the extraction step. Removal of the macroalgae or part thereof from the superheated water will have the effect of terminating the pre-treatment step and preventing further hydrolysis of the polysaccharide material.

Prior to the step of extraction, the pre-treated macroalgae or part thereof may be rinsed (e.g. with water).

Aptly, prior to extraction, the macroalgae or part thereof may be contacted with an acid, for example a mineral acid such as hydrochloric acid. This serves to remove residual calcium and other multi-valent cations.

The step of extracting polysaccharide from the macroalgae, or part thereof, comprises contacting the macroalgae, or part thereof, with an alkali solution to yield an alginate composition. Aptly, the alkali solution is selected from: sodium hydroxide, potassium hydroxide, calcium hydroxide, magnesium hydroxide and sodium carbonate.

The extraction process may be carried out according to any known method, for example as described by Hernandez-Carmona et al. (J. Applied Phycology, 1999, 10, 507-513).

Aptly, the step of extracting polysaccharide from the macroalgae, or part thereof, comprises contacting the macroalgae, or part thereof, with carbonate ions. Aptly the alkali solution comprises carbonate ions.

The step of extracting polysaccharide from the macroalgae, or part thereof, comprises contacting the macroalgae, or part thereof, with an alkali solution, for example sodium carbonate. Aptly the alkali solution comprises sodium carbonate.

Aptly, the step of extracting polysaccharide from the macroalgae, or part thereof, comprises contacting the macroalgae, or part thereof, with an alkali solution, for example sodium carbonate, at a concentration of 0.1% to 4%, for example 0.5 to 3%, for example of 2 to 4%. In one embodiment of the process, the alkali solution (e.g. sodium carbonate) may be employed at low concentration. For example, it may be contacted with the macroalgae or part thereof at a concentration of 0.5 to 3%, preferably 1 to 2.5%, more preferably 1.5 to 2.5%.

Aptly, the step of extracting polysaccharide from the macroalgae, or part thereof, comprises the addition of sodium carbonate solution to the macroalgae wherein the ratio of sodium carbonate solution to macroalgae stipe is 3:1 to 20:1, for example 5:1 to 18:1, for example 5:1 to 15:1, by weight.

Optionally, the step of extracting polysaccharide from the macroalgae, or part thereof, comprises contacting the macroalgae, or part thereof, with a hot alkali solution to yield an alginate composition. The term 'hot' refers to a temperature which is above room temperature but not so high that it degrades the macroalgae. The temperatures required to maintain a hot alkali solution will be known to the skilled person.

Aptly, the step of extracting polysaccharide from the macroalgae, or part thereof, further comprises the step of soaking the macroalgae or part thereof, in the alkali solution for a period of about 2 minutes to 24 hours, for example 30 minutes to 24 hours, for example 2 to 18 hours, for example about 4 to 14 hours, for example 6 to 10 hours. Aptly, the step of extraction polysaccharide from the macroalgae, or part thereof, comprises mixing macroalgae or part thereof with alkali solution using an extruder, for example as described in Vauchel, P, Kaas, R, Arhallas, A, Baron, R. Legrand, J. 2008. Food and Bioprocess Technology, 1(3) p297-300.

Aptly, the step of extracting polysaccharide from the macroalgae, or part thereof, further comprises the step of separating the alginate composition from the macroalgae, or part thereof, for example by dilution, if necessary, and filtration, for example by centrifugation.

In order to precipitate alginate from the alginate composition, the alginate composition can be contacted with:
a. acid ('acid step'); or
b. calcium salt ('calcium salt step'); or
c. anti-solvent ('anti-solvent step').

Aptly, the acid step comprises contacting the alginate composition with an acid, preferably hydrochloric acid, to form an alginic acid precipitate. Aptly, the acid is at a concentration sufficient to reduce the pH of the solution to 2 or less. It is believed that the acid complexes with alginate to form an insoluble alginic acid, thereby forming a precipitate.

Aptly, the step of extracting polysaccharide from the macroalgae, or part thereof, further comprises the step of separating the alginic acid precipitate, for example by centrifugation. If desired, the alginic acid precipitate may be converted to a desired alginate salt, e.g. an alkali salt of the alginate.

Aptly, the calcium step comprises contacting the alginate composition with a calcium salt, for example calcium chloride to form calcium alginate. Aptly, the calcium step comprises contacting the alginate composition with an excess of calcium salt, for example calcium chloride at a concentration of about 500 mg/dL.

Aptly, the calcium step further comprises the step of converting the calcium alginate to alginic acid by contacting the calcium alginate with acid.

Aptly, the step of extracting polysaccharide from the macroalgae, or part thereof, further comprises the step of separating the alginic acid precipitate, for example by centrifugation. If desired, the alginic acid precipitate may be converted to a desired alginate salt, e.g. an alkali salt of the alginate.

Aptly, the anti-solvent step comprises contacting the alginate composition with an anti-solvent, for example ethanol (at a concentration of about 30 to 70%, for example 40 to 60%, for example approximately 50%), for example acetone (at a concentration of about 30 to 70%, for example 40 to 60%, for example approximately 50%).

Aptly, the step of extracting polysaccharide from the macroalgae, or part thereof, further comprises the step of separating the alginate salt precipitate, for example by centrifugation.

Aptly, prior to the pre-treatment step herein described, the process further comprises separating whole macroalgae into sections comprising: the leaf, the bark and the stipe. Where the bark is removed from the stipe, any known method may be used including both mechanical and chemical methods. Mechanical methods include peeling such as that described in EP 3 068 804, for example. Alternatively, the process may further comprise removal of the leaf from the stipe, i.e. separating the whole macroalgae into the leaf and the stipe with the bark still intact. In this embodiment, the stipe is "unpeeled".

Aptly, the process of the invention may be carried out on part of macroalgae wherein the part is selected from leaf, bark and stipe. Aptly the part is stipe. Aptly, the stipe is preferably divided into portions with a dimension that is less than 0.5cm, for example less than 0.5mm, by cutting or blending. Aptly, the stipe is preferably divided into 0.5cm to 2.0cm portions by cutting or blending. Aptly the part is unpeeled stipe (i.e. stipe which retains the bark). Aptly, the unpeeled stipe is preferably divided into portions with a dimension that is less than 0.5cm, for example less than 0.5mm, by cutting or blending. Aptly, the unpeeled stipe is preferably divided into 0.5cm to 2.0cm portions by cutting or blending. Aptly the part is leaf. Aptly, the leaf is preferably divided into portions with a dimension that is less than 0.5cm, for example less than 0.5mm by cutting or blending. Aptly, the leaf is preferably divided into 0.5cm to 2.0cm portions by cutting or blending.

Aptly, macroalgae selected from the group consisting of *Laminaria spp, Ascophyllum spp, Durvillaea spp, Ecklonia spp, Lessonia spp, Macrocytis spp* and *Sargassum spp,* for example *Laminaria hyperborea,* may be used in the process of the invention. In a particular embodiment, the macroalgae or part thereof for use in the invention is *Laminaria hyperborea.* Use of the stipe (peeled or unpeeled) of *Laminaria hyperborea* is particularly preferred.

It is an aim of certain aspects of the invention to provide, and there is provided herein, a process for obtaining polysaccharide, for example alginate, from macroalgae, or part thereof as herein described, comprising the steps of:
- removing bark from macroalgae, preferably portions of macroalgae stipe, for example by peeling;
- exposing the macroalgae, or part thereof, to superheated water maintained at a temperature of about 105 to 130°C within a pressurised vessel;
- soaking the macroalgae, or part thereof, in an alkali solution (for example at a concentration of up to 8%, for example up to 4%, for example 0.1 to 2%, for example 0.1 to 0.5%, for example 0.1 to 0.25%) with periodic shaking for around 4 to 20 hours, to form an alginate salt solution (for example sodium alginate);
- removing macroalgae residue from the alginate salt solution using separation procedures, preferably by centrifugation;
- forming an alginic acid precipitate or an alginate salt precipitate; and
- isolating the resultant precipitate, for example by filtration or centrifugation.

It is an aim of certain aspects of the invention to provide, and there is provided herein, a process for obtaining polysaccharide, for example alginate, from macroalgae, or part thereof as herein described, comprising the steps of:
- providing macroalgae, preferably portions of macroalgae stipe which are unpeeled;
- exposing the macroalgae, or part thereof, to superheated water maintained at a temperature of about 105 to 130°C within a pressurised vessel;
- soaking the macroalgae, or part thereof, in an alkali solution (for example at a concentration of up to 8%, for example up to 4%, for example 0.1 to 2%, for example 0.1 to 0.5%, for example 0.1 to 0.25%) with periodic shaking for around 4 to 20 hours, to form an alginate salt solution (for example sodium alginate);

- removing macroalgae residue from the alginate salt solution using separation procedures, preferably by centrifugation;
- forming an alginic acid precipitate or an alginate salt precipitate; and
- isolating the resultant precipitate, for example by filtration or centrifugation.

The step of forming an alginic acid precipitate from the alginate salt solution may be carried out as described herein or by any method known to a person skilled in the art, for example by contacting the alginate salt with acid. Optionally, the alginic acid precipitate is isolated and alkali solution is added to the alginic acid precipitate to convert it back into an alginate salt. The resultant alginate salt may be converted to a precipitate by the addition of an anti-solvent (for example ethanol).

The step of forming an alginate salt precipitate from the alginate salt solution may be carried out as described herein or by any method known to a skilled person in the art, for example by neutralising the alginate salt solution to a pH of 7 by the addition of acid followed by the addition of an anti-solvent (for example ethanol) to directly precipitate alginate salt.

It is believed that certain aspects of the invention provide a process having:
- increased yield of alginate;
- increased quality of alginate; and/or
- shorter treatment time, for the extraction of alginate.

### Definitions

It will be appreciated that many of the terms and phrases used within this specification will be known to the person skilled in the art. Definitions provided herein are intended as embodiments of the invention separately and in any combination with any other embodiments and/or definitions herein.

As used herein, the term "macroalgae" may also be referred to as "seaweed". The seaweed may be *e.g.* brown algae, such as a kelp. The kelp may be tangle (*Laminaria hyperborea*)*.* The seaweed is typically built up by three distinct morphological parts, these features are fronds (leaves), stipe (stem) and haptera (holdfast). The stipe of a seaweed may be substantially cylindrical and comprises three distinctive regions depending on the radial distance from the centre axis: the radially inner portion comprises a core region of the stipe referred to as the inner core; the radially intermediate portion around the core comprises a tissue region referred to as outer core; and the radially outer portion comprises a protective surface layer also called outer layer (herein referred to as bark). As these regions are different in terms of their physical properties and chemical composition it could be beneficial to separate these regions. In certain embodiments of the invention, however, it may not be necessary to separate the bark from the stipe.

As used herein, the term "superheated water" refers to water heated to a temperature above its normal boiling point at atmospheric pressure but below the critical temperature at a pressure sufficient to maintain the liquid state. In this sense, superheated water has the same meaning as sub-critical water. According to the present invention, the pressure must be sufficient to maintain the super-heated water in a liquid state. According to the present invention, the macroalgae to be processed can be immersed in the water contained within a suitable pressure vessel. In certain embodiments, the water may be already in the vessel and is then heated after addition of macroalgae. In a further embodiment, the macroalgae may be placed in the vessel and the superheated water added. In one embodiment of the invention, seaweed is added continuously to a pressure vessel containing the superheated water by means of a suitable mechanism, such as an extruder, screw drive or twin valve system. The superheated water used in the process of the invention is not employed to extract the target polysaccharide, but rather in a pre-treatment step to improve the yield and quality of polysaccharide (e.g. alginate) obtained from the subsequent extraction step.

As used herein, the term "bleaching" refers to a reactive chemical process whereby pigmented materials i.e. coloured components are removed or extracted. To bleach is to make whiter or lighter in colour by exposure to a chemical agent. Examples of such chemical agents include:
formaldehyde;
a compound comprising, or that acts as a source of, peroxide or peroxy acid, for example hydrogen peroxide, peroxide salt, peroxy acid, hydroperoxide, carbonate salt, percarbonate salt, 6-(phthalimido)peroxyhexanoic acid (PAP), peracetic acid;
an oxidation catalyst, for example a mononuclear or dinuclear transition metal catalyst (for example manganese) (for example the oxidation catalyst may be selected from one or more groups selected from [(Mn^{IV})₂(u-O)₃(Me₃-TACN)₂]²⁺, [(Mn^{III})₂(u-O)(u-CH₃COO)₂(Me₃-TACN₂]²⁺ and [Mn^{III}Mn^{IV}(u-O)₂(u-CH₃COO)(Me₄-DTNE)]²⁺ and suitable salts thereof;
a peroxide activator (i.e. a compound that reacts with a source of a peroxide group to provide a peroxide group), for example tetra acetyl ethylene diamine (TAED);
a peroxy acid activator (i.e. a compound that reacts with a source of a peroxy acid to provide a peroxy acid group) for example tetra acetyl ethylene diamine (TAED);
hypochlorite;
a compound comprising, or that acts as a source of, chlorite;
chlorine dioxide;
chlorite salt;
chlorine.

As used herein, the term "extracting" is used interchangeably with "obtaining". According to the present invention, the process of extracting polysaccharide refers to obtaining hydrocolloids, in particular alginate from macroalgae. Methods for extracting polysaccharides, for example alginate, are known to the person skilled in the art. Extraction will generally involve solubilisation of the polysaccharide which is present in the macroalgae or part thereof. For example, it will involve solubilisation of the alginate which exists in the macroalgae (e.g. in the stipe) in an insoluble form, typically as calcium alginate. Following extraction, the resulting solution will generally be separated (e.g. filtered) from residual solid components of the macroalgae.

As used herein, the term "alginate" is used to refer to alginic acid salts, but also can refer to other derivatives of alginic acid and alginic acid itself. Alginic acid is a polysaccharide consisting of blocks of (1-4)-linked β-D-mannuronate (M) and α-L-guluronate (G). The properties of alginic acid are affected by the relative proportion of M and G residues as well as the molecular weight of the polymer. Alginic acid is extracted from the cell walls of brown algae as sodium, calcium and magnesium salts of alginic acid.

As used herein, the term "solution" refers to an aqueous solution, i.e. a substance dissolved in water.

As used herein, the term, "alkali solution" refers to a liquid aqueous solution containing alkali, having a pH greater than 7, with the ability to neutralise acids. According to certain aspects of the invention, the alkali solution may comprise carbonate ions or sodium carbonate.

As used herein, the term "acid" refers to a substance having a pH less than 7, or species which can donate a proton in a solution, with the ability to neutralize alkalis. According to certain aspects of the invention, the acid added during the extraction process complexes with the alginate to form an insoluble alginic acid. In one aspect the acid is hydrochloric acid.

As used herein, the term "precipitate" refers to an insoluble solid substance formed from a liquid solution.

As used herein, the term "increased yield" refers to increased output of product (polysaccharide, for example alginate) from macroalgae processing. Increased yield specifically refers to increased alginate obtained from macroalgae or part thereof.

As used herein, the term "purity" refers to the percentage of product (for example alginate) obtained in a sample, extracted from macroalgae processing. For example, a purity of around 90% to 100% may be obtained. The term "increased purity" refers to a larger percentage of product within a sample, obtained from macroalgae processing.

Throughout the description and claims of this specification, the words "comprise" and "contain" and variations of them mean "including but not limited to" and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics or groups described in conjunction with a particular aspect, embodiment or example of the invention are to be understood to be applicable to any other aspect, embodiment or example described herein unless incompatible therewith. All of the features disclosed in this specification, and/or all of the steps of any method or process so disclosed, may be combined in any combination, except combinations where at least some of the features and/or steps are mutually exclusive. The invention is not restricted to any details of any foregoing embodiments. Further details of certain embodiments are provided below.

### Detailed Description of the Embodiments of the Invention

**Figure 1** illustrates a bar chart showing the amount (depicted as percentage) of alginate extracted from peeled and rinsed stipe of *L. hyperborea.* The data shown in figure 1 was generated as described in example 1.
**Figure 2** illustrates the percentage of alginate recovery from the stipe of *L. hyperborea* following pre-treatment with steam at 115°C for 13, 26 and 52 minutes. The data shown in figure 2 was generated as described in example 2.
**Figure 3** illustrates the percentage of alginate recovery from dried and fresh samples of L. *hyperborea* following pre-treatment with superheated water at 115°C for 0, 7, 13 and 26 minutes. The data shown in figure 3 was generated as described in example 3.
**Figure 4** illustrates the viscosity of alginate recovered from dried and fresh samples of L. *hyperborea* following pre-treatment with superheated water at 115°C for 0, 7, 13 and 26 minutes. The data shown in figure 4 was generated as described in example 3.

### Examples

All examples made use of *Laminaria hyperborea.* Examples 1 and 2 used peeled stipe which had been rinsed in water to provide a standard starting material. The preparation of the samples used in Example 3 is described below. Extraction yields relate to dry matter obtained from the rinsed stipe sections. The water content of the stipe was determined by loss on drying at 105°C to determine the dry matter content of the stipe.

All examples made use of water for the superheated water treatment which was prepared as follows: potable (mains) water was first passed through a reverse osmosis system which removed the majority of the dissolved ions. The resultant water was then passed through a mixed bed of deioniser resin which removed the remainder of the dissolved ions and reduced the conductivity to a low level. In this way, the conductivity of the potable (mains) water was reduced from around 500µS to between approximately 3 and 5µS.

### Example 1

### a. Pre-treatment

The stipe of *L. hyperborea* was peeled, rinsed and sectioned into approximately 0.5cm portions by cutting. The stipe sections were subjected to a pre-treatment process, specifically the stipe was exposed to either; superheated-water (115°C for 13 minutes or 125°C for 30 minutes), boiling water (100°C for 30 minutes) or acid (for 8 to 24 hours) or the stipe received no treatment at all.

The superheated water was generated by heating the water above its normal boiling point (over 100°C) and maintained as a liquid by the application of pressure. The stipe sections were immersed in water contained within a suitable vessel. The water may be heated after the addition of the macroalgae sections or alternatively the macroalgae may be placed into the pressurised vessel followed by the addition of the superheated water.

Alternatively, the stipe sections were treated with sulfuric acid (0.04M) overnight or the stipe was exposed to boiling water (100°C).

### b. Extraction

Stipe sections (2-3g) were extracted overnight by periodic shaking in 4% sodium carbonate solution (15:1 sodium carbonate solution to stipe) to form a solution containing water soluble sodium alginate. The liquid was separated from the undissolved solids within the solution by centrifugation. Hydrochloric acid was added to aliquots of the liquid to precipitate out water insoluble alginic acid from the solution. The mixture was then subject to centrifugation and the pellet was washed with water to remove soluble impurities and residual acid and recentrifuged. The pellet was then dried for harvesting and the weight of the precipitate was expressed as a percent of the dry matter in the original stipe.

### Example 2 - Comparative

The stipe of *L. hyperborea* was peeled, rinsed and sectioned into approximately 0.5cm portions by cutting. The stipe sections were subject to a pre-treatment process, specifically the stipe was exposed to saturated steam at 115°C for 13, 26 and 52 minutes.

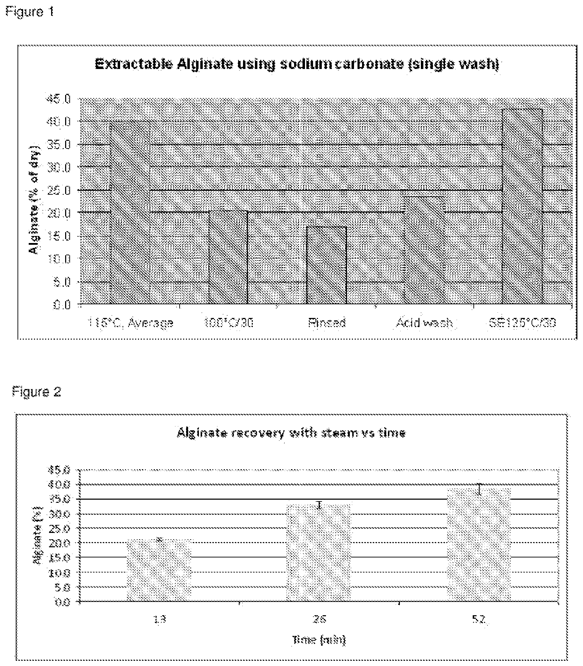

Stipe sections (2-3g) were extracted as described in example 1b (Extraction). Each time point experiment was analysed in triplicate. The results (% alginate) are shown in figure 2.

The yield of alginate determined following steam pre-treatment at 115°C increased as the treatment time increased from 13, 26 and 52 minutes, with the largest yield of alginate found with steam pre-treatment for 52 minutes. The yield of alginate extracted from the stipe of the macroalgae after 52 minutes of steam pre-treatment was comparable to the alginate recovery following pre-treatment with super-heated water for 13 minutes (see figure 1). Therefore, pre-treatment of macroalgae stipe with super-heated water produces a high yield of alginate under a short period of treatment time.

The quality of the alginate product was assessed by measuring the viscosity of a solution of the alginate in water. The viscosity of 0.5% by weight solution sodium alginate was measured by the falling ball viscometer method. Pre-treatment for 13 minutes resulted in the alginate having a viscosity of approximately 2.6 mPa.s following superheated water pre-treatment and a viscosity of 1.5 mPa.s following steam pre-treatment. The lower viscosity of the steam treated alginate indicated more degradation of the alginate product. Due to the low concentration of the sodium alginate solution used in the assessment, the ball did not reach terminal velocity and therefore the measured viscosity values are not absolute. Nevertheless, the higher value following pre-treatment with superheated water is indicative of the reduced extent of degradation of the recovered alginate product.

### Conclusion

Pre-treatment with superheated water results in higher yields compared to either boiling water or acid overnight treatment. Pre-treatment with superheated water requires a short treatment time when compared to steam pre-treatment and results in a higher quality product.

### Example 3

Dried, flaked *L. hyperborea* and freshly shredded *L. hyperborea* stipe with bark were subjected to a pre-treatment process using superheated water followed by extraction of alginate.

Preparation of dried, flaked *L. hyperborea:* the leaf and epiphytes were removed, but the bark was left on prior to shredding and drying. The dried *L. hyperborea* stipe was then re-hydrated prior to carrying out the superheated water pre-treatment.

Preparation of freshly shredded *L. hyperborea* stipe: the leaf and epiphytes were removed and the stipe with bark was soaked in demineralised water to remove salt so that the solution conductivity was less than 200 µS. The soaked stipe was then blended using a Tefal Blendforce II, type BL42 blender with a 600W motor on the highest power setting.

For both dried and fresh materials, the particle size of the stipe was in the range of approximately 500 to 1000 µm.

Samples of the materials were transferred to a pressure cooker and subjected to a pre-treatment process using superheated water at a temperature of 115°C and a pressure of 168.8 kPa for 0, 7, 13 and 26 minutes. Stipe (50 to 75g) was extracted for 60 minutes by periodic shaking in 0.25% sodium carbonate solution (5:1 sodium carbonate solution to stipe) to form a solution containing water soluble sodium alginate. The liquid was separated from the undissolved solids within the solution by filtration through a 100µm nylon filter. Hydrochloric acid was added to aliquots of the liquid to precipitate out water insoluble alginic acid from the solution. The mixture was then subjected to filtration through a 100µm nylon filter and the gel was washed with water to remove soluble impurities and residual acid and re-filtered. The washed gel was then converted to the sodium form and precipitated with alcohol and dried. The weight of the recovered alginate was expressed as a percent of the dry matter in the salt depleted stipe.

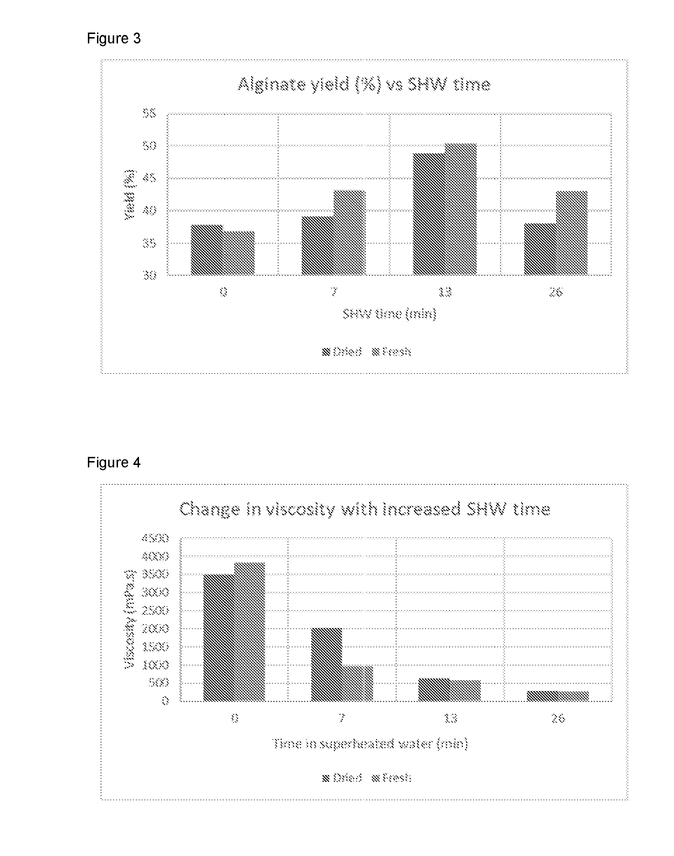

Each time point experiment was analysed in triplicate. The results (% alginate) are shown in figure 3 and in Table 1 below.

**Table 1**

| **Sample SHW pre-treatment time (min)** | **Dried Sample Alginate yield (% of dry)** | **Fresh Sample Alginate yield (% of dry)** |
|---|---|---|
| 0 | 37.8 | 36.8 |
| 7 | 39.1 | 43.1 |
| 13 | 48.9 | 50.4 |
| 26 | 38.0 | 43.1 |

Superheated water pre-treatment of both dried and fresh stipe with bark produces a high yield of alginate. The alginate obtained from the unpeeled stipe (both dried and fresh samples) was found to be substantially free from colour confirming that the quality of the alginate is not adversely impacted by the presence of the pigment-containing bark in the initial sample.

The quality of the alginate product obtained from both the dried and fresh starting materials was also assessed by measuring the viscosity of a 1% solution of the alginate in water. Viscosity was measured by the falling ball viscometer method and the measured values are shown in figure 4 and Table 2 below.

**Table 2**

| **Sample SHW pre-treatment time (min)** | **Dried Sample Viscosity (mPa.s)** | **Fresh Sample Viscosity (mPa.s)** |
|---|---|---|
| 0 | 3504 | 3833 |
| 7 | 2032 | 959 |
| 13 | 638 | 580 |
| 26 | 287 | 260 |

For both dried and fresh materials, the viscosity of the extracted alginate decreased as the duration of the superheated water pre-treatment increased, and the viscosity results are similar regardless of the initial state of the sample. The lower than expected viscosity seen in the fresh sample at 7 min SHW time may be due to the age of the sample when tested and may be the result of microbial degradation.

## Claims

1. A process for obtaining polysaccharide from macroalgae, or part thereof, comprising the steps of:
• a pre-treatment step of exposing the macroalgae, or part thereof, to superheated water at a temperature of about 101°C to 150°C for a period of from 30 seconds to 60 minutes, wherein the superheated water is maintained in a liquid state by the application of pressure; and
• subsequently, an extraction step of extracting polysaccharide from the macroalgae, or part thereof;
wherein the polysaccharide is an alginate selected from alginic acid, an alginate salt, and an alginate derivative; and
wherein the step of extracting polysaccharide from the macroalgae, or part thereof, comprises contacting the macroalgae, or part thereof, with an alkali solution to yield an alginate composition.

2. The process according to claim 1, wherein the macroalgae is brown algae.

3. The process according to claim 1 or claim 2, wherein the macroalgae, or part thereof, is exposed to the superheated water at a temperature of about 105°C to 130°C, for example 110°C to 125°C, for example 112°C to 118°C, preferably at 115°C, for example 110°C to 130°C, preferably at 125°C.

4. The process according to any one of the preceding claims, wherein the superheated water is maintained in a liquid state by the application of pressure applied at approximately 105 to 500 kPa, for example 120 to 300 kPa, for example 140 to 240 kPa, for example 150 to 190 kPa, for example 165 to 170 kPa, for example 140 to 270 kPa, for example 130 to 235 kPa.

5. The process according to any one of the preceding claims, wherein the macroalgae is exposed to the superheated water for a period of about 2 to 40 minutes, for example 5 minutes to 25 minutes, for example 7 to 15 minutes, for example about 7 to 13 minutes.

6. The process according to any one of the preceding claims, wherein prior to the step of extraction the macroalgae or part thereof is contacted with an acid, for example a mineral acid such as hydrochloric acid.

7. The process according to any one of the preceding claims, wherein the alkali solution is selected from: sodium hydroxide, potassium hydroxide, calcium hydroxide, magnesium hydroxide and sodium carbonate, preferably wherein the alkali solution is sodium carbonate, more preferably wherein the alkali solution has a concentration of 0.1% to 3%.

8. The process according to any one of the preceding claims, wherein the ratio of alkali solution, for example sodium carbonate, to macroalgae stipe is from 3:1 to 20:1, for example 10:1 to 20:1, for example 5:1 to 15:1, by weight.

9. The process according to any one of the preceding claims, wherein the macroalgae, or part thereof, is soaked in the alkali solution for a period of about 2 minutes to 24 hours, for example 30 minutes to 24 hours, for example 2 to 18 hours, for example about 4 to 14 hours, for example 6 to 10 hours.

10. The process according to any one of the preceding claims, wherein the step of extracting polysaccharide from the macroalgae, or part thereof, further comprises:
- contacting the alginate composition with an acid, for example hydrochloric acid, wherein the acid is at a concentration sufficient to reduce the pH of the solution to 2 or less, to form an alginic acid precipitate; or
- contacting the alginate composition with an excess of calcium salt, for example calcium chloride at a concentration of about 500 mg/dL; or
- contacting the alginate composition with an anti-solvent, for example ethanol at a concentration of about 30 to 70 %, for example 40 to 60 %, for example approximately 50%, for example acetone at a concentration of about 30 to 70 %, for example 40 to 60 %, for example approximately 50%.

11. The process according to any one of the preceding claims wherein the macroalgae is a part thereof and the part is selected from leaf, bark and stipe.

12. The process according to any one of claims 1 to 10, wherein the macroalgae is a part thereof and the part is unpeeled stipe.

13. The process according to claim 11 or claim 12, wherein the part is stipe and wherein the stipe is divided into portions having a dimension of less than 2cm by cutting or blending.

14. The process according to any one of the preceding claims wherein the macroalgae is selected from the group consisting of: of *Laminaria spp, Ascophyllum spp, Durvillaea spp, Ecklonia spp, Lessonia spp, Macrocytis spp* and *Sargassum spp,* preferably wherein the macroalgae is Laminaria hyperborea.

15. The process according to any one of the preceding claims comprising the steps of:
• optionally removing bark from macroalgae, preferably portions of macroalgae stipe, for example by peeling;
• exposing the macroalgae, or part thereof, to the superheated water maintained at a temperature of about 105 to 130°C within a pressurised vessel;
• soaking the macroalgae, or part thereof, in an alkali solution at a concentration of about 0.1 to 8% with periodic shaking for about 4 to 20 hours, to form an alginate salt solution, for example sodium alginate;
• removing macroalgae residues from the alginate salt solution, preferably by centrifugation;
• forming an alginic acid precipitate or an alginate salt precipitate;
• isolating the resultant precipitate, for example by filtration or centrifugation.

## Patentansprüche

1. Verfahren zum Erhalten von Polysaccharid aus Makroalgen oder einem Teil davon, umfassend die folgenden Schritte:
• einen Vorbehandlungsschritt zum Aussetzen der Makroalgen, oder eines Teils davon, überhitztem Wasser bei einer Temperatur von etwa 101 °C bis 150 °C über einen Zeitraum von 30 Sekunden bis 60 Minuten, wobei das überhitzte Wasser durch Anlegen von Druck in einem flüssigen Zustand gehalten wird; und
• danach einen Extraktionsschritt zum Extrahieren von Polysaccharid aus den Makroalgen oder einem Teil davon;
wobei das Polysaccharid ein Alginat ist, das aus Alginsäure, einem Alginatsalz und einem Alginatderivat ausgewählt ist; und
wobei der Schritt des Extrahierens von Polysaccharid aus den Makroalgen oder einem Teil davon Kontaktieren der Makroalgen oder eines Teils davon mit einer Alkalilösung umfasst, um eine Alginatzusammensetzung zu erzielen.

2. Verfahren nach Anspruch 1, wobei die Makroalgen Braunalgen sind.

3. Verfahren nach Anspruch 1 oder Anspruch 2, wobei die Makroalgen oder ein Teil davon dem überhitzten Wasser bei einer Temperatur von etwa 105 °C bis 130 °C, beispielsweise 110 °C bis 125 °C, beispielsweise 112 °C bis 118 °C, vorzugsweise bei 115 °C, beispielsweise 110 °C bis 130 °C, vorzugsweise bei 125 °C ausgesetzt sind.

4. Verfahren nach einem der vorstehenden Ansprüche, wobei das überhitzte Wasser durch Anlegen von Druck in einem flüssigen Zustand gehalten wird, der bei etwa 105 bis 500 kPa, beispielsweise 120 bis 300 kPa, beispielsweise 140 bis 240 kPa, beispielsweise 150 bis 190 kPa, beispielsweise 165 bis 170 kPa, beispielsweise 140 bis 270 kPa, beispielsweise 130 bis 235 kPa angelegt wird.

5. Verfahren nach einem der vorstehenden Ansprüche, wobei die Makroalgen dem überhitzten Wasser über einen Zeitraum von etwa 2 bis 40 Minuten, beispielsweise 5 Minuten bis 25 Minuten, beispielsweise 7 bis 15 Minuten, beispielsweise etwa 7 bis 13 Minuten, ausgesetzt sind.

6. Verfahren nach einem der vorstehenden Ansprüche, wobei vor dem Schritt zum Extrahieren die Makroalgen oder ein Teil davon mit einer Säure, beispielsweise einer Mineralsäure wie Salzsäure, in Kontakt gebracht werden.

7. Verfahren nach einem der vorstehenden Ansprüche, wobei die Alkalilösung aus Folgendem ausgewählt ist: Natriumhydroxid, Kaliumhydroxid, Calciumhydroxid, Magnesiumhydroxid und Natriumcarbonat, wobei die Alkalilösung vorzugsweise Natriumcarbonat ist, wobei die Alkalilösung bevorzugter eine Konzentration von 0,1 % bis 3 % aufweist.

8. Verfahren nach einem der vorstehenden Ansprüche, wobei das Verhältnis von Alkalilösung, beispielsweise Natriumkarbonat, zum Makroalgenstiel von 3:1 bis 20:1, beispielsweise 10:1 bis 20:1, beispielsweise 5:1 bis 15:1, nach Gewicht reicht.

9. Verfahren nach einem der vorstehenden Ansprüche, wobei die Makroalgen oder ein Teil davon über einen Zeitraum von etwa 2 Minuten bis 24 Stunden, beispielsweise 30 Minuten bis 24 Stunden, beispielsweise 2 bis 18 Stunden, beispielsweise etwa 4 bis 14 Stunden, beispielsweise 6 bis 10 Stunden, in der Alkalilösung eingeweicht werden.

10. Verfahren nach einem der vorstehenden Ansprüche, wobei der Schritt zum Extrahieren von Polysaccharid aus den Makroalgen oder einem Teil davon weiter umfasst:
- Kontaktieren der Alginatzusammensetzung mit einer Säure, beispielsweise Salzsäure, wobei die Säure in einer Konzentration vorhanden ist, die ausreicht, um den pH-Wert der Lösung auf 2 oder weniger zu senken, um eine Alginsäureausfällung zu bilden; oder
- Kontaktieren der Alginatzusammensetzung mit einem Überschuss an Calciumsalz, beispielsweise Calciumchlorid in einer Konzentration von etwa 500 mg/dl; oder
- Kontaktieren der Alginatzusammensetzung mit einem Anti-Lösungsmittel, beispielsweise Ethanol in einer Konzentration von etwa 30 bis 70 %, beispielsweise 40 bis 60 %, beispielsweise etwa 50 %, beispielsweise Aceton in einer Konzentration von etwa 30 bis 70 %, beispielsweise 40 bis 60 %, beispielsweise etwa 50 %.

11. Verfahren nach einem der vorstehenden Ansprüche, wobei die Makroalgen ein Teil davon sind und der Teil aus Blatt, Rinde und Stiel ausgewählt ist.

12. Verfahren nach einem der Ansprüche 1 bis 10, wobei die Makroalgen ein Teil davon sind, und der Teil ungeschälter Stiel ist.

13. Verfahren nach Anspruch 11 oder Anspruch 12, wobei der Teil Stiel ist und wobei der Stiel durch Schneiden oder Mischen in Abschnitte unterteilt wird, die eine Abmessung von weniger als 2 cm aufweisen.

14. Verfahren nach einem der vorstehenden Ansprüche, wobei die Makroalgen aus der Gruppe ausgewählt sind, bestehend aus: Laminaria spp, Ascophyllum spp, Durvillaea spp, Ecklonia spp, Lessonia spp, Macrocytis spp und Sargassum spp, wobei die Makroalgen vorzugsweise Laminaria hyperborea sind.

15. Verfahren nach einem der vorstehenden Ansprüche, umfassend die Schritte zum:
• optional Entfernen von Rinde von Makroalgen, vorzugsweise von Abschnitten von Makroalgenstielen, beispielsweise durch Schälen;
• Aussetzen der Makroalgen oder eines Teils davon dem überhitzten Wasser, das auf einer Temperatur von etwa 105 bis 130 °C gehalten wird, in einem Druckbehälter;
• Einweichen der Makroalgen oder eines Teils davon in einer Alkalilösung in einer Konzentration von etwa 0,1 bis 8 % unter regelmäßigem Schütteln, etwa 4 bis 20 Stunden lang, um eine Alginatsalzlösung, beispielsweise Natriumalginat, zu bilden;
• Entfernen von Makroalgenrückständen aus der Alginatsalzlösung, vorzugsweise durch Zentrifugieren;
• Bilden einer Alginsäureausfällung oder einer Alginatsalzausfällung;
• Isolieren der entstehenden Ausfällung, beispielsweise durch Filtern oder Zentrifugieren.

## Revendications

1. Procédé d'obtention de polysaccharide à partir de macroalgues, ou d'une partie de celles-ci, comprenant les étapes suivantes :
• une étape de prétraitement consistant à exposer les macroalgues, ou une partie de celles-ci, à de l'eau surchauffée à une température d'environ 101 °C à 150 °C pendant une période de 30 secondes à 60 minutes, dans lequel l'eau surchauffée est maintenue à l'état liquide par l'application d'une pression ; et
• ensuite, une étape d'extraction consistant à extraire un polysaccharide à partir de la macroalgue, ou d'une partie de celle-ci ;
dans lequel le polysaccharide est un alginate choisi parmi l'acide alginique, un sel d'alginate et un dérivé d'alginate ; et
dans lequel l'étape d'extraction de polysaccharide à partir des macroalgues, ou d'une partie de celles-ci, comprend la mise en contact des macroalgues, ou d'une partie de celles-ci, avec une solution alcaline pour obtenir une composition d'alginate.

2. Procédé selon la revendication 1, dans laquelle la macroalgue est une algue brune.

3. Procédé selon la revendication 1 ou la revendication 2, dans lequel la macroalgue, ou une partie de celle-ci, est exposée à l'eau surchauffée à une température d'environ 105 °C à 130 °C, par exemple de 110 °C à 125 °C, par exemple de 112 °C à 118 °C, de préférence à 115 °C, par exemple de 110 °C à 130 °C, de préférence à 125 °C.

4. Procédé selon l'une quelconque des revendications précédentes, dans lequel l'eau surchauffée est maintenue à l'état liquide par l'application d'une pression appliquée à environ 105 à 500 kPa, par exemple 120 à 300 kPa, par exemple 140 à 240 kPa, par exemple 150 à 190 kPa, par exemple 165 à 170 kPa, par exemple 140 à 270 kPa, par exemple 130 à 235 kPa.

5. Procédé selon l'une quelconque des revendications précédentes, dans lequel la macroalgue est exposée à l'eau surchauffée pendant une période d'environ 2 à 40 minutes, par exemple de 5 minutes à 25 minutes, par exemple de 7 à 15 minutes, par exemple d'environ 7 à 13 minutes.

6. Procédé selon l'une quelconque des revendications précédentes, dans lequel, avant l'étape d'extraction, la macroalgue ou une partie de celle-ci est mise en contact avec un acide, par exemple un acide minéral tel que l'acide chlorhydrique.

7. Procédé selon l'une quelconque des revendications précédentes, dans lequel la solution alcaline est choisie parmi : l'hydroxyde de sodium, l'hydroxyde de potassium, l'hydroxyde de calcium, l'hydroxyde de magnésium et le carbonate de sodium, de préférence dans lequel la solution alcaline est du carbonate de sodium, plus préférentiellement dans lequel la solution alcaline présente une concentration de 0,1 % à 3 %.

8. Procédé selon l'une quelconque des revendications précédentes, dans lequel le rapport solution alcaline, par exemple carbonate de sodium, sur stipe de macroalgue est de 3:1 à 20:1, par exemple de 10:1 à 20:1, par exemple de 5:1 à 15:1, en poids.

9. Procédé selon l'une quelconque des revendications précédentes, dans lequel la macroalgue, ou une partie de celle-ci, est trempée dans la solution alcaline pendant une période d'environ 2 minutes à 24 heures, par exemple de 30 minutes à 24 heures, par exemple de 2 à 18 heures, par exemple d'environ 4 à 14 heures, par exemple de 6 à 10 heures.

10. Procédé selon l'une quelconque des revendications précédentes, dans lequel l'étape d'extraction de polysaccharide à partir des macroalgues, ou d'une partie de celles-ci, comprend en outre :
- la mise en contact de la composition d'alginate avec un acide, par exemple de l'acide chlorhydrique, dans lequel l'acide est à une concentration suffisante pour réduire le pH de la solution à 2 ou moins, pour former un précipité d'acide alginique ; ou
- la mise en contact de la composition d'alginate avec un excès de sel de calcium, par exemple du chlorure de calcium à une concentration d'environ 500 mg/dl ; ou
- la mise en contact de la composition d'alginate avec un antisolvant, par exemple de l'éthanol à une concentration d'environ 30 à 70 %, par exemple de 40 à 60 %, par exemple d'environ 50 %, par exemple de l'acétone à une concentration d'environ 30 à 70 %, par exemple de 40 à 60 %, par exemple d'environ 50 %.

11. Procédé selon l'une quelconque des revendications précédentes, dans lequel la macroalgue est une partie de celle-ci et la partie est choisie parmi feuille, écorce et stipe.

12. Procédé selon l'une quelconque des revendications 1 à 10, dans lequel la macroalgue est une partie de celle-ci et la partie est un stipe non pelé.

13. Procédé selon la revendication 11 ou la revendication 12, dans lequel la partie est un stipe et dans lequel le stipe est divisé en portions présentant une dimension inférieure à 2 cm par découpe ou mélange.

14. Procédé selon l'une quelconque des revendications précédentes, dans lequel la macroalgue est choisie dans le groupe consistant en : Laminaria spp, Ascophyllum spp, Durvillaea spp, Ecklonia spp, Lessonia spp, Macrocytis spp et Sargassum spp, de préférence dans laquelle la macroalgue est Laminaria hyperborea.

15. Procédé selon l'une quelconque des revendications précédentes, comprenant les étapes suivantes :
• facultativement le retrait de l'écorce des macroalgues, de préférence des portions de stipe de macroalgues, par exemple par pelage ;
• l'exposition des macroalgues, ou d'une partie de celles-ci, à l'eau surchauffée maintenue à une température d'environ 105 à 130 °C à l'intérieur d'un récipient sous pression ;
• le trempage des macroalgues, ou d'une partie de celles-ci, dans une solution alcaline à une concentration d'environ 0,1 à 8 % sous agitation périodique pendant environ 4 à 20 heures, pour former une solution de sel d'alginate, par exemple d'alginate de sodium ;
• l'élimination des résidus de macroalgues à partir de la solution de sel d'alginate, de préférence par centrifugation ;
• la formation d'un précipité d'acide alginique ou d'un précipité de sel d'alginate ;
• l'isolement du précipité résultant, par exemple par filtration ou centrifugation.
